(19) Europäisches Patentamt
European Patent Office
Office européen des brevets

(11) **EP 4 660 037 A1**

(12) **EUROPEAN PATENT APPLICATION**
published in accordance with Art. 153(4) EPC

(43) Date of publication:
**10.12.2025  Bulletin 2025/50**

(21) Application number: **23919420.2**

(22) Date of filing: **13.11.2023**

(51) International Patent Classification (IPC):
***B60W 30/14*** (2006.01)

(52) Cooperative Patent Classification (CPC):
**B60W 30/14; B60W 30/18; B60W 50/14**

(86) International application number:
**PCT/CN2023/131239**

(87) International publication number:
**WO 2024/159856 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **31.01.2023  CN 202310093435**

(71) Applicant: **BYD Company Limited
Shenzhen, Guangdong 518118 (CN)**

(72) Inventors:
• **ZHANG, Hui
Shenzhen, Guangdong 518118 (CN)**

• **ZHU, Futang
Shenzhen, Guangdong 518118 (CN)**
• **ZHANG, Fan
Shenzhen, Guangdong 518118 (CN)**
• **WANG, Chunsheng
Shenzhen, Guangdong 518118 (CN)**
• **CHEN, Xiaomei
Shenzhen, Guangdong 518118 (CN)**

(74) Representative: **Mathys & Squire
The Shard
32 London Bridge Street
London SE1 9SG (GB)**

(54) **VEHICLE CONTROL METHOD, STORAGE MEDIUM, CONTROLLER, AND VEHICLE**

(57)    A vehicle control method, a computer-readable storage medium, a controller, and a vehicle. The control method comprises: acquiring a current position of a vehicle and a current distance between the current position of the vehicle and a position of a traffic intersection ahead of the vehicle; determining a target vehicle speed of the vehicle when arriving at the traffic intersection ahead; determining a first distance by which the vehicle travels in a process of decelerating from the current vehicle speed of the vehicle to the target vehicle speed under a first energy recovery working condition, and determining a second distance by which the vehicle travels in a process of decelerating from the current vehicle speed of the vehicle to the target vehicle speed under a second energy recovery working condition, wherein a first preset braking force under the first energy recovery working condition is greater than a second preset braking force under the second energy recovery working condition; and controlling the vehicle according to the current distance, the first distance and the second distance.

**FIG. 1**

Description

## CROSS-REFERENCE TO RELATED APPLICATIONS

The present disclosure claims priority to Chinese Patent Application No. 202310093435.4, filed on January 31, 2023, entitled "Vehicle Control Method, Storage Medium, Controller and Vehicle", which is incorporated herein by reference in its entirety.

## FIELD

The present disclosure relates to the field of vehicle technology, and in particular to a vehicle control method, a computer-readable storage medium, a controller, and a vehicle.

## BACKGROUND

When a vehicle passes through a traffic intersection, the vehicle may require sharp deceleration to wait at the red light or may require rapid acceleration to pass the traffic intersection before the traffic light changes. Consequently, the vehicle may experience frequent stop-and-go operation, or a driving safety hazard may occur, resulting in increased energy consumption and potential safety risks to pedestrians in the vicinity.

## DISCLOSURE

The present disclosure aims to solve one of the technical problems in the related art to at least some extent. To this end, the purpose of the present disclosure is to provide a vehicle control method, a computer-readable storage medium, a controller, and a vehicle; to determine a distance between a vehicle and a traffic intersection ahead of the vehicle by considering energy recovery factor, and to control the vehicle according to the judgment result, so that the vehicle will not experience frequent stop-and-go operation when passing through the traffic intersection ahead, and is conducive to maximum energy recovery during the process of the vehicle passing through the traffic intersection ahead.

In a first aspect, the present disclosure provides a vehicle control method, comprising: acquiring a current position of a vehicle and a current distance between the current position of the vehicle and a position of a traffic intersection ahead of the vehicle; determining a target vehicle speed of the vehicle when arriving at the traffic intersection ahead; determining a first distance by which the vehicle travels in a process of decelerating from the current vehicle speed of the vehicle to the target vehicle speed under a first energy recovery working condition, and determining a second distance by which the vehicle travels in a process of decelerating from the current vehicle speed of the vehicle to the target vehicle speed under a second energy recovery working condition, wherein a first preset braking force under the first energy recovery working condition is greater than a second preset braking force under the second energy recovery working condition; and controlling the vehicle according to the current distance, the first distance and the second distance.

In a second aspect, the present disclosure provides a computer-readable storage medium having a computer program stored thereon, the above-mentioned vehicle control method is implemented when a computer program is executed by a processor.

In a third aspect, the present disclosure provides a controller, comprising a memory and a processor, the above-mentioned vehicle control method is implemented when a computer program stored in the memory is executed by the processor.

In a fourth aspect, the present disclosure provides a vehicle, comprising the above-mentioned controller.

A vehicle control method, a computer-readable storage medium, a controller, and a vehicle according to an embodiment of the present disclosure, firstly, acquiring a current position of a vehicle and a current distance between the current position of the vehicle and a position of a traffic intersection ahead of the vehicle; secondly, determining a target vehicle speed of the vehicle when arriving at the traffic intersection ahead; then determining a first distance by which the vehicle travels in a process of decelerating from the current vehicle speed of the vehicle to the target vehicle speed under a first energy recovery working condition, and determining a second distance by which the vehicle travels in a process of decelerating from the current vehicle speed of the vehicle to the target vehicle speed under a second energy recovery working condition; thereby controlling the vehicle according to the current distance, the first distance and the second distance. Thus, by considering energy recovery factor, the vehicle is controlled according to the distance between the vehicle and the traffic intersection ahead of the vehicle, so that the vehicle will not experience frequent stop-and-go operation when the vehicle passing through the traffic intersection ahead, and it is conducive to a maximum energy recovery during the process of the vehicle passing through the traffic intersection ahead.

Additional aspects and advantages of the present disclosure will be partially provided in the following descriptions, or will partially become apparent from the following descriptions, or will be ascertained through practice of the disclosure.

## BRIEF DESCRIPTION OF THE DRAWINGS

FIG. 1 is a flow chart of a vehicle control method according to an embodiment of the present disclosure;
FIG. 2 (a) is a flow chart of a vehicle control method according to a specific embodiment of the present disclosure;
FIG. 2 (b) is a flow chart of a vehicle control method according to another specific embodiment of the present disclosure;
FIG. 3 is a schematic curve diagram of vehicle travel duration and vehicle speed according to an embodiment of the present disclosure;
FIG. 4 is a schematic curve diagram of vehicle travel duration and vehicle speed according to another embodiment of the present disclosure;
FIG. 5 is a structural block diagram of a controller according to an embodiment of the present disclosure;
FIG. 6 is a structural block diagram of a vehicle according to an embodiment of the present disclosure.

## DETAILED DESCRIPTION

The specific embodiments of the present disclosure are described in detail below, examples of which are shown in the accompanying drawings, wherein the same or similar symbols referred represent the same or similar elements or elements with the same or similar functions. The embodiments described below with reference to the accompanying drawings are exemplary and are intended to illustrate the present disclosure, but should not be construed as limiting the present disclosure.
A vehicle control method, a computer-readable storage medium, a controller, and a vehicle according to the specific embodiments of the present disclosure are described in detail below with reference to the accompanying drawings.

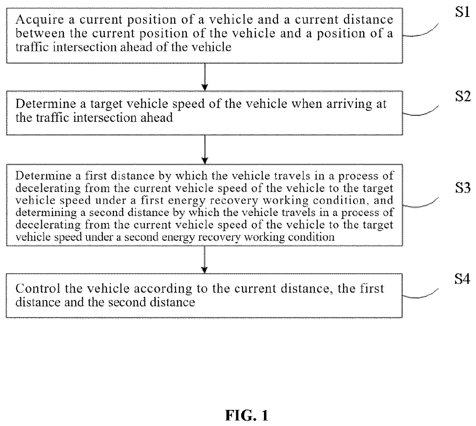

FIG. 1 is a flow chart of a vehicle control method according to an embodiment of the present disclosure.
As shown in FIG. 1, a vehicle control method comprises:
S1, acquiring a current position of a vehicle and a current distance between the current position of the vehicle and a position of a traffic intersection ahead of the vehicle.
Thereinto, the vehicle can be installed with a navigation and positioning system, through which the current position of the vehicle can be obtained. At the same time, map information can also be obtained through the system, and the position of the traffic intersection ahead of the vehicle can be obtained according to the map information.
Specifically, the vehicle's location within the map information is obtained according to the current position of the vehicle, and then the traffic intersection ahead of the vehicle can be determined according to the vehicle's location and a navigation route of the vehicle, and the position of the traffic intersection ahead of the vehicle can be further determined. The current distance between the vehicle and the traffic intersection ahead of the vehicle can be calculated (such as by using Euclidean distance formula) according to the current position of the vehicle and the position of the traffic intersection ahead of the vehicle.
S2, determining a target vehicle speed of the vehicle when arriving at the traffic intersection ahead.
In some embodiments, determining the target vehicle speed of the vehicle when arriving at the traffic intersection ahead, comprises: obtaining traffic light information at the traffic intersection ahead of the vehicle, and obtaining congestion level of the road ahead; and determining the target speed according to the traffic light information and the congestion level.
Specifically, when calculating a first distance of the vehicle travelling from the vehicle to the traffic intersection ahead of the vehicle under a first energy recovery working condition, the traffic light information (such as red light or green light information) of the traffic intersection ahead of the vehicle can be obtained, and the congestion level of the road ahead can be obtained according to the map information, and then the target vehicle speed can be determined according to the traffic light information and the congestion level.
In some embodiments, determining the target vehicle speed according to traffic light information and congestion level, comprises: when the traffic light information at the traffic intersection ahead of the vehicle indicates permission to proceed, if the congestion level of the road ahead is high, determining the target vehicle speed as a first preset speed; when the traffic light information at the traffic intersection ahead of the vehicle indicates permission to proceed, if the congestion level of the road ahead is low, determining the target vehicle speed as a second preset speed, wherein the second preset speed is greater than the first preset speed; when the traffic light information at the traffic intersection ahead of the vehicle indicates that the road ahead is closed to traffic, determining the target vehicle speed as a third preset speed, wherein the third preset speed is less than the first preset speed.

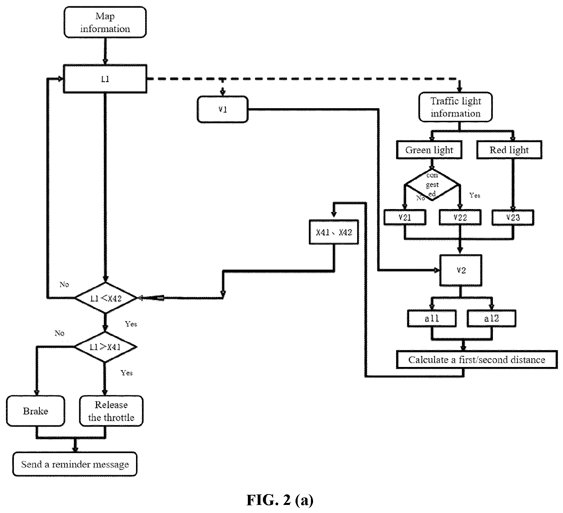

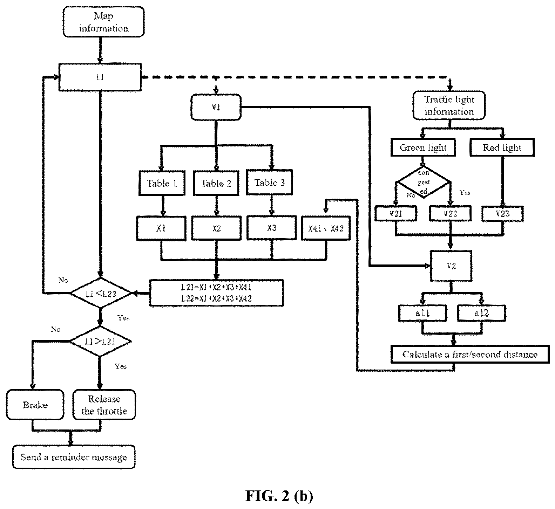

Specifically, as shown in FIG. 2 (a) and FIG. 2 (b), when the traffic light information at the traffic intersection ahead of the vehicle indicates permission to proceed (i.e., green light), if the congestion level of the road ahead is high, the target vehicle speed V2 is determined as a first preset speed V22 (i.e., vehicle traversal speed on congested road during permissive signal phase); otherwise, the target vehicle speed V2 is determined as a second preset speed V21 (i.e., vehicle traversal speed on normal road during permissive signal phase), wherein the second preset speed V21 is greater than the first preset speed V22; when the traffic light information at the traffic intersection ahead of the vehicle indicates that the road ahead is closed to traffic (i.e., red light), the target vehicle speed V2 is determined as a third preset speed V23 (i.e., restricted vehicle speed during prohibitive signal phase), wherein the third preset speed V23 (which can be 0) is less than the first preset speed V21.

S3, determining a first distance by which the vehicle travels in a process of decelerating from the current vehicle speed of the vehicle to the target vehicle speed under a first energy recovery working condition, and determining a second distance by which the vehicle travels in a process of decelerating from the current vehicle speed of the vehicle to the target vehicle speed under a second energy recovery working condition.

Wherein a first preset braking force under the first energy recovery working condition is greater than a second preset braking force under the second energy recovery working condition.

Specifically, a central aspect of the present disclosure is that before a vehicle arriving at a traffic intersection ahead of the vehicle, energy recovery can be performed when the vehicle travels in a process of the decelerating, wherein energy recovery is activatable upon throttle release or brake application. Based on this, a first energy recovery working condition is predefined corresponding to a braking condition, under this working condition, driver-applied braking (such as by applying the brake pedal) or vehicle automatic auxiliary braking is required to achieve target braking effect. During this process, the vehicle deceleration intensity is relatively greater, the vehicle coasting distance is short, and then a larger first target deceleration can be set correspondingly. Therefore, the above-mentioned first distance is calculated corresponding to the first energy recovery working condition. At the same time, a second energy recovery working condition is also predefined correspond to a condition of releasing the throttle, under this working condition, the vehicle can achieve target braking effect by coasting or adaptive energy recovery. During this process, the vehicle deceleration intensity is relatively less, the vehicle coasting distance is long, and a smaller second target deceleration can be set correspondingly. Therefore, the above-mentioned second distance is calculated corresponding to the second energy recovery working condition.

In some specific implementations, when calculating the first distance and the second distance, the current vehicle speed of the vehicle, the above-mentioned first target deceleration and second target deceleration will be obtained, and traffic light information at the traffic intersection ahead of the vehicle, congestion level of the road ahead, etc. will be obtained, then the first distance and the second distance are calculated according to the current vehicle speed of the vehicle, the first target deceleration, the second target deceleration, the traffic light information, the congestion level of the road ahead, etc.

Specifically, the first target deceleration and the second target deceleration are respectively predetermined according to passenger ride comfort (which can be determined through experiments), and when adopting a maximum deceleration and a minimum deceleration generated by driving motor braking (without the involvement of mechanical braking), passenger ride comfort can be satisfied by decelerating the vehicle at a deceleration between the first target deceleration and the second target deceleration.

S4, controlling the vehicle according to the current distance, the first distance and the second distance.

Specifically, if the current distance is long, for example, longer than or equal to the second distance, that is, the vehicle is far from the traffic intersection ahead of the vehicle, then there is no need to brake at this time, and the vehicle can maintain the current state or travel in an accelerated state. As the vehicle continues to travel, the distance between the vehicle and the traffic intersection ahead of the vehicle is getting closer. When it is close to a certain distance, such as between the second distance and the first distance, in order to avoid an accident or a red light running violation, the vehicle needs to slow down. At this time, a reminder message can be sent to remind the driver to slow down by releasing the throttle or by activating moderate electric braking, and the vehicle can be controlled to recover energy during the deceleration process. When the distance between the vehicle and the traffic intersection ahead of the vehicle is closer furthermore, such as shorter than or equal to the first distance, it means that the vehicle is very close to the traffic intersection ahead of the vehicle. In order to avoid an accident or a red light running violation, the vehicle needs to slow down further. At this time, a reminder message can be sent to remind the driver to slow down by stepping on the brake pedal or by activating reasonable electric braking, and the vehicle can be controlled to recover energy during the deceleration process. Therefore, energy recovery factor is considered in the method to judge the distance between the vehicle and the traffic intersection ahead of the vehicle, and reminds and commands are applied to the vehicle according to the judgment result, and it is conducive to a maximum energy recovery during the process of the vehicle passing through the traffic intersection ahead of the vehicle.

In some embodiments of the present disclosure, controlling the vehicle according to the current distance, the first distance, and the second distance, comprises: if the current distance is longer than the first distance and shorter than the second distance, controlling the vehicle to send a first reminder message of reminding the driver to reduce accelerator pedal opening degree; and if the current distance is shorter than or equal to the first distance, controlling the vehicle to send a second reminder message of reminding the driver to apply mechanical braking. Optionally, if the current distance is longer than or equal to the second distance, controlling the vehicle to maintain the current state.

The first reminder message and the second reminder message may be provided through voice, text or light information. For example, the first reminder message information is green indicator light information, and the second reminder message information is red indicator light information.

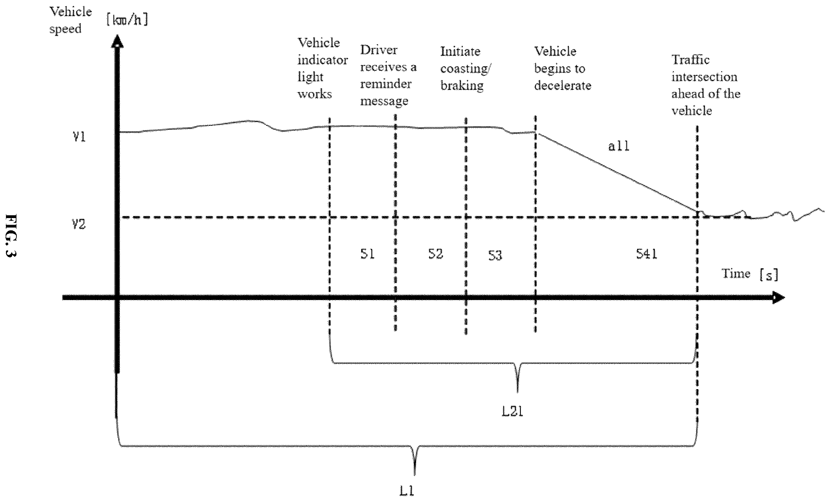

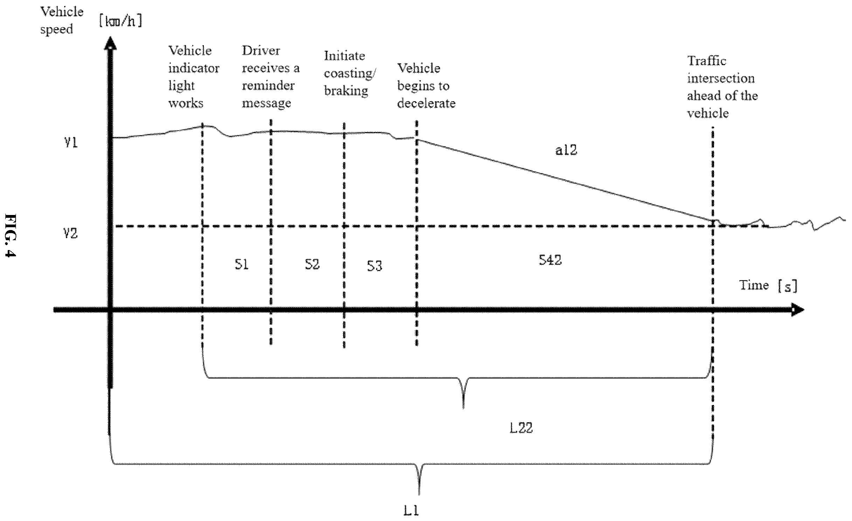

Specifically, as shown in FIG. 2 (a), a current distance $L1$ can be obtained according to the map information and the current position of the vehicle. The first distance of the vehicle travelling to the traffic intersection ahead of the vehicle under the first energy recovery working condition is $X41$, and the second distance of the vehicle travelling to the traffic intersection ahead of the vehicle under the second energy recovery working condition is $X42$. Regardless of the reaction duration (including at least one of a first reaction duration which is set as the duration from the moment of the vehicle sending a reminder message to the moment of the driver operating the vehicle based on the reminder message, and a second reaction duration which is set as the duration from the moment of the driver operating the vehicle based on the reminder message to the moment of the vehicle responding to the operation and beginning to decelerate), if $L1 \geq X42$, no reminder message will be sent and the vehicle will continue to travel, wherein as shown in FIG. 3 and FIG. 4, the first reaction duration may include the duration from the moment of the system sending a reminder message to the moment of the driver receiving the reminder message (recorded as a system operation duration $S1$), the duration from the moment of the driver receiving the reminder message to the moment of the driver implementing an action (recorded as a driver reaction duration $S2$), and a second reaction duration is recorded as $S3$; if $X41 < L1 < X42$, the vehicle is controlled to send a reminder message of releasing the throttle, so that the driver can operate the vehicle to decelerate by releasing the throttle in time, that is, when decelerating by releasing the throttle at this time, the vehicle can achieve target braking effect by coasting or adaptive energy recovery, the vehicle deceleration intensity is relatively less, and the deceleration is small; if $L1 \leq X41$, the vehicle is controlled to send a braking reminder message so that the driver can step on the brake pedal in time to decelerate, that is, at this time, target braking effect driver can be achieved by driver-applied braking or moderate braking, the vehicle deceleration intensity is relatively larger, and the deceleration is large. In this way, coasting distance and driving performance can be guaranteed, so that the vehicle will not experience frequent stop-and-go operation, which is highly efficient and safe.

In other embodiments of the present disclosure, controlling the vehicle according to the current distance, the first distance, and the second distance, comprises: obtaining a reaction duration, wherein the reaction duration includes at least one of a first reaction duration which is set as the duration from the moment of the vehicle sending a reminder message to the moment of the driver operating the vehicle based on the reminder message, and a second reaction duration which is set as the duration from the moment of the driver operating the vehicle based on the reminder message to the moment of the vehicle responding to the operation and beginning to decelerate; obtaining an estimated driving distance of the vehicle within the reaction duration according to the current vehicle speed and the reaction duration; and controlling the vehicle to send a reminder message according to the current distance, the estimated driving distance, the first distance, and the second distance.

Thereinto, controlling the vehicle to send a reminder message according to the current distance, the estimated driving distance, the first distance, and the second distance, may comprise: if the current distance is longer than a sum of the first distance and the estimated driving distance, and shorter than a sum of the second distance and the estimated driving distance, the vehicle is controlled to send a first reminder message of reminding the driver to reduce accelerator pedal opening degree; and if the current distance is shorter than or equal to a sum of the first distance and the estimated driving distance, the vehicle is controlled to send a second reminder message of reminding the driver to apply mechanical braking.

Specifically, as shown in FIG. 2 (b), a current distance $L1$ can be obtained according to the map information and the current position of the vehicle. The first distance of the vehicle travelling to the traffic intersection ahead of the vehicle under the first energy recovery working condition is $X41$, and the second distance of the vehicle travelling to the traffic intersection ahead of the vehicle under the second energy recovery working condition is $X42$. As shown in FIG. 3 and FIG. 4, considering the above reaction duration, the driving distance of the vehicle within the reaction duration (i.e., the estimated driving distance) is $X1+X2+X3$. If $L1 \geq L22$, $L22 = X1+X2+X3+X42$, no reminder massage is sent and the vehicle continues to travel; if $L21 < L1 < L22$, $L21 = X1+X2+X3+X41$, the vehicle is controlled to send a reminder message of releasing the throttle, so that the driver can operate the vehicle to decelerate by releasing the throttle in time, that is, when decelerating by releasing the throttle at this time, the vehicle can achieve target braking effect by coasting or adaptive energy recovery, the vehicle deceleration intensity is relatively less, and the deceleration is small; if $L1 \leq L21$, the vehicle is controlled to send a braking reminder message so that the driver can step on the brake pedal in time to decelerate, that is, at this time, the vehicle can achieve target braking effect by driver-applied braking or moderate braking, the vehicle deceleration intensity is relatively larger, and the deceleration is large. In this way, coasting distance and driving performance can be guaranteed, so that the vehicle will not experience frequent stop-and-go operation, which is highly efficient and safe.

In some embodiments of the present disclosure, the vehicle control method further comprises: controlling the vehicle to recover energy when it is detected that the accelerator pedal opening degree is reduced, or the vehicle performs mechanical braking.

Specifically, if the vehicle is controlled according to the comparison results and it is detected that the accelerator pedal opening degree is reduced, or the vehicle performs mechanical braking, which means that the vehicle is decelerating during the process of traveling towards the traffic intersection ahead of the vehicle, the vehicle can be controlled to recover energy at this time. Thus, coasting distance and driving performance can be guaranteed together with as much energy as possible being recovered, the energy consumption is reduced.

In some embodiments of the present disclosure, determining the first distance by which the vehicle travels in the process of decelerating from the current vehicle speed of the vehicle to the target vehicle speed under the first energy recovery working condition, comprises: obtaining a first target deceleration corresponding to the first energy recovery working condition; and obtaining the first distance according to the current vehicle speed, the target vehicle speed, and the first target deceleration.

Specifically, as shown in FIG. 2 (a), FIG. 2 (b), and FIG. 3, a first target deceleration a11 and a driving duration S41 corresponding to the first energy recovery working condition are acquired. The first distance X41 can be obtained by the following formula according to the current vehicle speed V1, the target vehicle speed V2, and the first target deceleration a11, which is:

$$X41= (V1^2-V2^2) / (2*a11)$$

wherein the current vehicle speed V1 refers to the speed of the vehicle when the reminder message is sent.

Specifically, when calculating X41, the relevant calculation formulas include:

$$X41=V1*S41-\frac{1}{2}*a11*S41^2,$$

$$V1-V2=a11*S41,$$

wherein S41 refers to the duration corresponding to a11, and a formula is obtained by conversion, which is:

$$X41 = (V1^2 - V2^2) / (2*a11)_.$$

In some embodiments of the present disclosure, determining the second distance by which the vehicle travels in the process of decelerating from the current vehicle speed of the vehicle to the target vehicle speed under the second energy recovery working condition, comprises: obtaining a second target deceleration corresponding to the second energy recovery working condition, wherein, the second target deceleration is larger than the first target deceleration; and obtaining the first distance according to the current vehicle speed, the target vehicle speed, and the second target deceleration.

Specifically, as shown in FIG. 2 (a), FIG. 2 (b), and FIG. 4, a second target deceleration a12 and a driving duration S42 corresponding to the second energy recovery working condition are acquired, both of the values of a11 and a12 are positive numbers, and a11>a12. The second distance X42 can be obtained by the following formula according to the current vehicle speed V1, the target vehicle speed V2, and the second target deceleration a12, which is:

$$X42= (V1^2-V2^2) / (2*a12)$$

Specifically, when calculating X42, the relevant calculation formulas include:

$$X42=V1*S42-\frac{1}{2}*a12*S42^2,$$

$$V1-V2=a12*S42,$$

wherein S42 refers to the duration corresponding to a12, and a formula is obtained by conversion, which is:

$$X42 = (V1^2 - V2^2) / (2*a12)_.$$

In some embodiments of the present disclosure, the above-mentioned system operation duration, driver reaction duration, and vehicle response duration are determined according to current vehicle speed and preset corresponding relationships; and the first driving distance X1 is obtained according to the current vehicle speed and the system operation duration, the second driving distance X2 is obtained according to the current vehicle speed and the driver reaction duration, and the third driving distance X3 is obtained according to the current vehicle speed and the vehicle response duration; a sum of the first driving distance X1, the second driving distance X2 and the third driving distance X3 is determined to be the above-mentioned estimated driving distance.

Thereinto, the preset corresponding relationships include the corresponding relationship between vehicle speed and system operation duration, the corresponding relationship between vehicle speed and driver reaction duration, and the corresponding relationship between vehicle speed and vehicle response duration. The above corresponding relationship can be stored in a table. The system operation duration refers to the duration from the moment of the system sending a reminder message to the moment of the driver receiving the reminder message. Table 1 illustrates examples of system operation durations corresponding to different vehicle speeds; the driver reaction duration refers to the duration from the moment of the driver receiving the reminder message to the moment of the driver implementing an action. Table 2 illustrates examples of driver reaction durations corresponding to different vehicle speeds, the vehicle speed is positively correlated with the driver reaction duration; the vehicle response duration refers to the duration from the moment of the driver implementing an action to the moment of the vehicle responding to commands. Table 3 illustrates examples of vehicle response durations corresponding to different vehicle speeds.

Table 1

| Vehicle Speed (km/h) | 60 | 80 | ...... |
|---|---|---|---|
| System Operation Duration (s) | 0.05 | 0.05 | ...... |

Table 2

| Vehicle Speed (km/h) | 60 | 80 | ...... |
|---|---|---|---|
| Driver Reaction Duration (s) | 1.2 | 1.5 | ...... |

Table 3

| Vehicle Speed (km/h) | 60 | 80 | ...... |
|---|---|---|---|
| Vehicle Response Duration (s) | 0.15 | 0.15 | ...... |

Specifically, as shown in FIG. 2 (b), FIG. 3 and FIG. 4, a system operation duration S1, a driver reaction duration S2 and a second reaction duration S3 can be obtained according to the current vehicle speed V1 by looking up Table 1, Table 2 or Table 3. It can be assumed that the vehicle travels at a constant speed during S1, S2 or S3. The first driving distance X1 can be obtained by the formula X1=V1*S1, the second driving distance X2 can be obtained by the formula X2=V1*S2, and the third driving distance X3 can be obtained by the formula X3=V1*S3.

In summary, the vehicle control method according to the specific embodiments of the present disclosure, the current distance between the vehicle and the traffic intersection ahead of the vehicle is determined by considering energy recovery factor, and when the current distance is longer than the first distance but less than the second distance, the vehicle is controlled to send a first reminder message of reminding the driver to reduce accelerator pedal opening degree; when the current distance is shorter than or equal to the first distance, the vehicle is controlled to send a second reminder message of reminding the driver to apply mechanical braking, and the vehicle can be controlled to recover energy during the deceleration process. Thus, coasting distance and driving performance can be guaranteed together with as much energy as possible being recovered, which is highly efficient and safe.

According to the vehicle control method of the above embodiment, the present disclosure provides a computer-readable storage medium.

In this embodiment, a computer program is stored on the computer-readable storage medium, and the vehicle control method of the above embodiment is implemented when a computer program is executed by a processor.

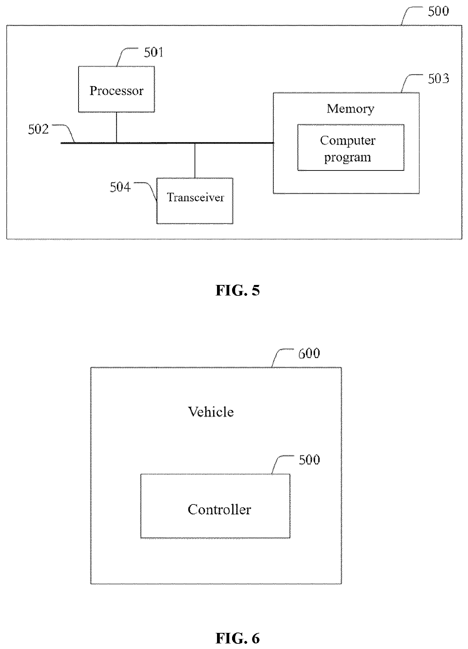

FIG. 5 is a structural block diagram of a controller according to an embodiment of the present disclosure.

As shown in FIG. 5, a controller 500 comprises: a processor 501 and a memory 503. Wherein the processor 501 and the memory 503 are connected, such as through a bus 502. Optionally, the controller 500 may also include a transceiver 504. It should be noted that, the number of the transceiver 504 is not limited to one in practical applications, and the structure of the controller 500 does not impose any limitations on the embodiment of the present disclosure.

The processor 501 can be a CPU (Central Processing Unit), a general-purpose processor, a DSP (Digital Signal Processor), an ASIC (Application Specific Integrated Circuit), an FPGA (Field Programmable Gate Array), or other programmable logic devices, or transistor logic devices, or hardware components, or any combination thereof. It can implement or execute various exemplary logic blocks, modules, and circuits as described in the previous embodiment. The processor 501 may also be a combination which can implement computing functions, such as a combination of one or more microprocessors, a combination of a DSP and a microprocessor, and the like.

The bus 502 can comprise a path for transmitting information between the above components. The bus 502 can be a PCI (Peripheral Component Interconnect) bus or an EISA (Extended Industry Standard Architecture) bus. It can be divided into address bus, data bus, control bus, etc. For the convenience of representation, only one thick line is used in FIG. 5, but it does not mean that there is only one bus or only one type of bus.

The memory 503 is applied to store a computer program corresponding to the vehicle control method according to the above embodiment of the present disclosure, and the computer program is controlled and executed by the processor 501. The processor 501 is applied to execute the computer program stored in the memory 503 to implement the content shown in the above method embodiment. The controller 500 shown in FIG. 5 is only an example and does not impose any limitations on the functionality and the application of the embodiments of the present disclosure.

FIG. 6 is a structural block diagram of a vehicle according to an embodiment of the present disclosure.

As shown in FIG. 6, a vehicle 600 includes the controller 500 which is described in the above embodiment.

The vehicle, according to the embodiment of the present disclosure, is able to guarantee the coasting distance and driving performance together with as much energy as possible being recovered through the controller described above, which is highly efficient and safe.

It should be noted that the logic and/or steps represented in the flow chart or otherwise described herein, for example, can be considered as a computer-executable sequence listing for implementing logical functions, and can be specifically implemented in any computer-readable medium, which can be executed by an instruction execution system, device or apparatus (such as a computer-based system, a system including a processor, or other system that can fetch instructions from an instruction execution system, device or apparatus and execute instructions), or can be executed in combination with these instruction execution system, device or apparat. For the purposes of this specification, "computer-readable medium" can be any device that can contain, store, communicate, disseminate or transmit a program which can be executed by an instruction execution system, device or apparatus, or can be executed in combination with these instruction execution system, device or apparatus. More specific examples of computer-readable medium (a non-exhaustive list) include the following: an electrical connection portion with one or more wirings (electronic device), a portable computer disk box (magnetic device), a random access memory (RAM), a read-only memory (ROM), an erasable and programmable read-only memory (EPROM or flash memory), an optical fiber device, and a portable compact disk read-only memory (CDROM). In addition, the computer-readable medium can even be paper or other suitable medium on which the program is printed, since the program can be obtained electronically, for example, by optically scanning the paper or other medium and then editing, interpreting or handling in other suitable ways if necessary, and then the program is stored in a computer memory.

It will be appreciated that the various components of the present disclosure can be implemented through hardware, software, firmware or a combination thereof. In the above-mentioned embodiments, multiple steps or methods can be implemented through software or firmware stored in a memory and executed by a suitable instruction execution system. For example, if it is implemented through hardware, as in another embodiment, it can be implemented by any one of the following techniques well-known in the art or their combination: a discrete logic circuit provided with a logic gate circuit to implement a logic function for a data signal, a dedicated integrated circuit provided with a suitable combination of logic gate circuits, a programmable gate array (PGA), a field programmable gate array (FPGA), etc.

In the description of this specification, the description with reference to the terms "one embodiment", "some embodiments", "examples", "specific examples", or "some examples" means that the specific features, structures, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics can be combined in any one or more embodiments or examples in a suitable manner.

In the description of the present disclosure, it will be appreciated that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like indicate orientations or positional relationships based on the orientations or positional relationships shown in the accompanying drawings, and are only for the convenience of describing the present disclosure and simplifying the description, and do not indicate or imply that the referred device or element must have a specific orientation, be constructed and operated in a specific orientation, and therefore will not be understood as a limitation on the present disclosure.

In addition, the terms "first" and "second" are used for descriptive purposes only and will not be understood as indicating or implying relative importance or indicating the number of the corresponding technical features implicitly. Thus, a feature defined as "first" or "second" can comprise at least one of the features explicitly or implicitly. In the description of the present disclosure, "multiple" means two or more, such as two, three, etc., unless there is another clear and specific limitation.

In the present disclosure, unless otherwise expressly defined or specified, the terms "installed", "connected", "connected", "fixed" and the like will be understood in a broad sense, for example, it can be a fixed connection, a detachable connection, or an integral connection; it can be a mechanical connection or an electrical connection; it can be a direct connection or an indirect connection through an intermediate medium, it can be the internal connection of two elements or the interaction relationship between two elements, unless otherwise clearly defined. For ordinary technicians in this field, the specific meanings of the above terms in the present disclosure can be understood according to specific circumstances.

In the present disclosure, unless otherwise expressly defined or specified, a first feature being "above" or "below" a second feature means that the first feature contacts with the second feature directly, or the first feature contacts with the second feature indirectly through an intermediate medium. Moreover, a first feature being "above", "over" or "up" a second feature means that the first feature is directly above or obliquely above the second feature, or simply means that the height of the first feature is higher than the height of the second feature. A first feature being "below", "under" or "down" a second feature means that the first feature is directly below or obliquely below the second feature, or simply means that the height of the first feature is lower than the height of the second feature.

Although the embodiments of the present disclosure have been shown and described above, it is to be understood that the above embodiments are illustrative and are not to be construed as limitations of the present disclosure. A person skilled in the art can change, modify, replace, and vary the above embodiments within the scope of the present disclosure.

## Claims

1. A vehicle control method, comprising:

   acquiring a current position of a vehicle and a current distance between the current position of the vehicle and a position of a traffic intersection ahead of the vehicle;
   determining a target vehicle speed of the vehicle when arriving at the traffic intersection ahead;
   determining a first distance by which the vehicle travels in a process of decelerating from the current vehicle speed of the vehicle to the target vehicle speed under a first energy recovery working condition, and determining a second distance by which the vehicle travels in a process of decelerating from the current vehicle speed of the vehicle to the target vehicle speed under a second energy recovery working condition, wherein a first preset braking force under the first energy recovery working condition is greater than a second preset braking force under the second energy recovery working condition; and
   controlling the vehicle according to the current distance, the first distance and the second distance.

2. The vehicle control method according to claim 1, wherein controlling the vehicle according to the current distance, the first distance, and the second distance, comprising:

   if the current distance is longer than the first distance and shorter than the second distance, controlling the vehicle to send a first reminder message of reminding the driver to reduce accelerator pedal opening degree; and
   if the current distance is shorter than or equal to the first distance, controlling the vehicle to send a second reminder message of reminding the driver to apply mechanical braking.

3. The vehicle control method according to claim 2, wherein the method further comprising:
   controlling the vehicle to recover energy when it is detected that the accelerator pedal opening degree is reduced, or the vehicle performs mechanical braking.

4. The vehicle control method according to any one of claims 1 to 3, wherein determining the first distance by which the vehicle travels in the process of decelerating from the current vehicle speed of the vehicle to the target vehicle speed under the first energy recovery working condition, comprising:

   obtaining a first target deceleration corresponding to the first energy recovery working condition; and
   obtaining the first distance according to the current vehicle speed, the target vehicle speed, and the first target deceleration.

5. The vehicle control method according to claim 4, wherein determining a second distance by which the vehicle travels in the process of decelerating from the current vehicle speed of the vehicle to the target vehicle speed under the second energy recovery working condition, comprising:

obtaining a second target deceleration corresponding to the second energy recovery working condition, wherein the second target deceleration is less than the first target deceleration; and
obtaining the second distance according to the current vehicle speed, the target vehicle speed, and the second target deceleration.

6. The vehicle control method according to any one of claims 1 to 5, wherein determining the target vehicle speed of the vehicle when arriving at the traffic intersection ahead, comprising:

obtaining traffic light information at the traffic intersection ahead of the vehicle, and obtaining congestion level of the road ahead; and
determining the target speed according to the traffic light information and the congestion level.

7. The vehicle control method according to claim 6, wherein determining the target vehicle speed according to the traffic light information and the congestion level, comprising:

when the traffic light information at the traffic intersection ahead of the vehicle indicates permission to proceed, if the congestion level of the road ahead is high, determining the target vehicle speed as a first preset speed;
when the traffic light information at the traffic intersection ahead of the vehicle indicates permission to proceed, if the congestion level of the road ahead is low, determining the target vehicle speed as a second preset speed, wherein the second preset speed is greater than the first preset speed; and
when the traffic light information at the traffic intersection ahead of the vehicle indicates that the road ahead is closed to traffic, determining the target vehicle speed as a third preset speed, wherein the third preset speed is less than the first preset speed.

8. The vehicle control method according to claim 1, wherein controlling the vehicle according to the current distance, the first distance, and the second distance, comprising:

obtaining a reaction duration, wherein the reaction duration includes at least one of a first reaction duration which is set as the duration from the moment of the vehicle sending a reminder message to the moment of the driver operating the vehicle based on the reminder message, and a second reaction duration which is set as the duration from the moment of the driver operating the vehicle based on the reminder message to the moment of the vehicle responding to the operation and beginning to decelerate;
obtaining an estimated driving distance of the vehicle within the reaction duration according to the current vehicle speed and the reaction duration; and
controlling the vehicle to send a reminder message according to the current distance, the estimated driving distance, the first distance, and the second distance.

9. The vehicle control method according to claim 8, wherein controlling the vehicle to send the reminder message according to the current distance, the estimated driving distance, the first distance, and the second distance, comprising:

if the current distance is longer than a sum of the first distance and the estimated driving distance, and shorter than a sum of the second distance and the estimated driving distance, controlling the vehicle to send a first reminder message of reminding the driver to reduce accelerator pedal opening degree; and
if the current distance is shorter than or equal to a sum of the first distance and the estimated driving distance, controlling the vehicle to send a second reminder message of reminding the driver to apply mechanical braking.

10. The vehicle control method according to claim 4 or claim 5, wherein obtaining the first distance by the following formula, which is:

$$X41 = (V1^2 - V2^2) / (2*a11)$$

wherein X41 refers to the first distance, V1 refers to the current vehicle speed, V2 refers to the target vehicle speed, and a11 refers to the first target deceleration.

**11.** A computer-readable storage medium, having a computer program stored thereon, wherein the vehicle control method according to any one of claims 1 to 10 is implemented when a computer program is executed by a processor.

**12.** A controller, comprising a processor and a memory, wherein the vehicle control method according to any one of claims 1 to 10 is implemented when a computer program stored in the memory is executed by the processor.

**13.** A vehicle, comprising the controller according to claim 12.

Acquire a current position of a vehicle and a current distance between the current position of the vehicle and a position of a traffic intersection ahead of the vehicle — S1

Determine a target vehicle speed of the vehicle when arriving at the traffic intersection ahead — S2

Determine a first distance by which the vehicle travels in a process of decelerating from the current vehicle speed of the vehicle to the target vehicle speed under a first energy recovery working condition, and determining a second distance by which the vehicle travels in a process of decelerating from the current vehicle speed of the vehicle to the target vehicle speed under a second energy recovery working condition — S3

Control the vehicle according to the current distance, the first distance and the second distance — S4

**FIG. 1**

FIG. 2 (a)

FIG. 2 (b)

FIG. 3

FIG. 4

FIG. 5

FIG. 6

## INTERNATIONAL SEARCH REPORT

| International application No. |
|---|
| **PCT/CN2023/131239** |

### A. CLASSIFICATION OF SUBJECT MATTER

B60W30/14(2006.01)i

According to International Patent Classification (IPC) or to both national classification and IPC

### B. FIELDS SEARCHED

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNABS, CNKI, VEN: 控制, 方法, 路口, 交通灯, 红绿灯, 能量回收, 制动, 刹车, 距离, control, method, cross, road, traffic, light, recovery, brake, distance

### C. DOCUMENTS CONSIDERED TO BE RELEVANT

| Category* | Citation of document, with indication, where appropriate, of the relevant passages | Relevant to claim No. |
|---|---|---|
| A | CN 115027466 A (GREAT WALL MOTOR CO., LTD.) 09 September 2022 (2022-09-09) description, paragraphs 0057-0119, and figures 1-2 | 1-13 |
| A | CN 114179804 A (DONGFENG LIUZHOU MOTOR CO., LTD.) 15 March 2022 (2022-03-15) entire document | 1-13 |
| A | CN 115284887 A (ZHEJIANG GEELY HOLDING GROUP CO., LTD. et al.) 04 November 2022 (2022-11-04) entire document | 1-13 |
| A | US 2015360688 A1 (HITACHI AUTOMOTIVE SYSTEMS LTD.) 17 December 2015 (2015-12-17) entire document | 1-13 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **03 January 2024** | **11 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131239**

| Patent document cited in search report | | | Publication date (day/month/year) | Patent family member(s) | | | Publication date (day/month/year) |
|---|---|---|---|---|---|---|---|
| CN | 115027466 | A | 09 September 2022 | None | | | |
| CN | 114179804 | A | 15 March 2022 | None | | | |
| CN | 115284887 | A | 04 November 2022 | None | | | |
| US | 2015360688 | A1 | 17 December 2015 | WO | 2014118962 | A1 | 07 August 2014 |
| | | | | EP | 2953110 | A1 | 09 December 2015 |
| | | | | EP | 2953110 | A4 | 18 January 2017 |
| | | | | EP | 2953110 | B1 | 10 November 2021 |
| | | | | US | 9446766 | B2 | 20 September 2016 |
| | | | | JP | 6055848 | B2 | 27 December 2016 |
| | | | | JPWO | 2014118962 | A1 | 26 January 2017 |

Form PCT/ISA/210 (patent family annex) (July 2022)

**REFERENCES CITED IN THE DESCRIPTION**

**Patent documents cited in the description**

- CN 202310093435